# EUROPEAN PATENT SPECIFICATION

(11) **EP 3 993 976 B1**
(45) Date of publication and mention of the grant of the patent: **03.04.2024**
(21) Application number: 20743175.0
(22) Date of filing: 24.06.2020
(51) Int. Cl.: B28B 7/00, B28B 7/36, B28B 19/00, B28B 23/00, B32B 1/00, B32B 13/04, B32B 13/12, B32B 27/40

(54) **METHOD FOR PRODUCING A CONSTRUCTION ELEMENT**
VERFAHREN ZUR HERSTELLUNG EINES KONSTRUKTIONSELEMENTS
PROCÉDÉ DE PRODUCTION D'UN ÉLÉMENT DE CONSTRUCTION

(30) Priority: 01.07.2019 FI 20195593
(43) Date of publication of application: 11.05.2022
(73) Proprietor: Stonelement Oy, 35220 Eräjärvi (FI)
(72) Inventor: VUOHELAINEN, Teppo, 35220 Eräjärvi (FI)
(74) Representative: Hovinen, Jari Juhani
(86) International application number: PCT/FI2020/050449
(87) International publication number: WO 2021/001597

(56) References cited:
- AU-B2- 412 710
- DE-A1- 3 921 779
- DE-U- 1 933 061
- GB-A- 2 455 284
- US-A- 4 915 888

## Description

### FIELD

The present invention relates to methods for producing construction elements, in particular to methods for producing construction elements which outermost surfaces are coated with natural stones or the like.

### BACKGROUND

Constructing a stone wall on location is costly, time consuming and leaves the site cluttered with piles of stone and other masonry construction materials and debris. It is also subject to weather conditions, which are unpredictable.

In order to avoid the above-mentioned problems, numerous methods for preparing prefabricated construction elements have been developed. For example, US 5,624,615 and US 9,975,272 disclose methods for producing reinforced construction elements, wherein natural stones are loaded on a bottom of a mould.

Slits between the natural stones are filled with sand prior to installing reinforcing structures and to pouring concrete to the mould. FI 124044 discloses an alternative method for producing construction elements comprising mounting a system comprising stone-based coating material pre-assembled on reinforcement means onto uncured self-compacting concrete.

One challenge of the methods cited above is how to avoid leaking of wet concrete on the outermost surface of the construction element. This is a particular challenge when self-compacting concrete is used. Furthermore, the methods are suitable for producing construction elements wherein only one of their outermost surfaces is coated with natural stones. For making a two-sided stone wall or the like by using construction elements produced by the methods described above, two construction elements have to be placed back to back.

FR2515567A1 discloses a method for producing precast concrete wall panel with natural stones. The method comprises layering natural stones on bottom of a mould to produce a first outermost surface of the wall panel followed by adding filler material to slits between the first coating elements, laying to the mould mortar, pouring an admixture comprising concrete to the mould and allowing the concrete to cure.

FR2942160A1 discloses a method for producing square shaped slab comprising spreading a layer of pulverulent material e.g. sand on a rigid surface and arranging non-graded rubbles in loose material layer by pushing the rubbles until the rubbles are in contact with rigid surface. A support is laid on the rubbles, a layer of finishing material or finishing substance is laid on a square shaped slab between the rubbles to form a visible face of the slab.

GB2455284A discloses a method of forming a prefabricated concrete block which includes a pattern of bricks in a front face so that, when installed, that face looks substantially the same as a brick wall. The method comprises the steps of
a) providing a mould,
b) layering first coating elements such as stones on bottom of the mould to produce a first outermost surface of the construction element,
c) adding filler material to slits between the first coating elements,
e) pouring to the mould an admixture comprising self-compacting concrete to produce a concrete layer.

US4915888A discloses a method of manufacturing a concrete block having decorative stones embedded in a surface thereof.

DE1933061U discloses a paper sheet for concrete patterning.

DE3921779A1 discloses a method for producing a prefabricated self-supporting partition which has a thin core of concrete to which ceramic or stoneware tiles are applied on both sides.

Thus, there is still need for further methods for producing construction elements.

### SUMMARY

The following presents a simplified summary in order to provide a basic understanding of some aspects of various embodiments of the invention. The summary is not an extensive overview of the invention. It is neither intended to identify key nor critical elements of the invention, nor to delineate the scope of the invention. The following summary merely presents some concepts of the invention in a simplified form as a prelude to a more detailed description of exemplifying embodiments of the invention.

In accordance with the invention, there is provided a new method for producing a construction element, the method comprising steps of
a) providing a mould,
b) layering first coating elements such as stones on bottom of the mould to produce a first outermost surface of the construction element,
c) adding filler material to slits between the first coating elements,
d) layering to the mould a sealant adapted to adhere to the first coating elements and to the filler material,
e) pouring to the mould an admixture comprising self-compacting concrete to produce a concrete layer and
f) for forming a second outermost surface of the construction element
   o providing an arrangement comprising
      - second coating elements such as stones layered on reinforcement means,
      - an elastic member arranged on the layered second coating elements and protruded into slits between the second coating elements,
   o mounting the arrangement on the concrete layer, and
   o removing the elastic member.

A number of exemplifying and non-limiting embodiments of the invention are described in accompanied dependent claims.

Various exemplifying and non-limiting embodiments of the invention and to methods of operation, together with additional objects and advantages thereof, are best understood from the following description of specific exemplifying embodiments when read in connection with the accompanying figures.

The verbs "to comprise" and "to include" are used in this document as open limitations that neither exclude nor require the existence of also unrecited features. The features recited in depending claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The exemplifying and non-limiting embodiments of the invention and their advantages are explained in greater detail below with reference to the accompanying figures, in which
figure 1 shows the first stage of a non-limiting exemplary embodiment of a method of the present invention wherein the first outermost surface of the construction element is produced,
figure 2A shows the second stage of a non-limiting exemplary embodiment of a method of the present invention wherein concrete has been added to a mould comprising the first outermost surface of the construction element of figure 1,
figure 2B shows an exemplary embodiment of the invention wherein the construction element includes two concrete sublayers separated by a heat isolating means,
figures 3A and 3B show the third stage of a non-limiting exemplary embodiment of a method of the present invention wherein an arrangement including the second outermost surface of the construction element is produced,
figure 4 shows the fourth stage of a non-limiting exemplary embodiment of a method of the present invention wherein the arrangement of figure 3 is mounted on the concrete layer of figure 2A in the aid of a lifting means.
figure 5 shows the fifth stage of a non-limiting exemplary embodiment of a method of the present invention wherein the lifting means is removed, and the second outermost surface is produced,
figures 6A and 6B show exemplary non-claimed methods for patterning the concrete layer of a construction element,
figure 7 shows an exemplary method for finishing the construction element of the present invention,
figure 8 shows the first stage of a non-limiting exemplary embodiment of a method of the present invention wherein the first outermost surface of the construction element has been produced on a curved mould,
figure 9 shows an exemplary stage of a non-limiting embodiment of a method of the present invention wherein a curved arrangement comprising the second outermost surface of the construction element is mounted on a curved concrete layer,
figure 10 shows another exemplary stage of a non-limiting embodiment of a method of the present invention wherein a curved arrangement comprising the second outermost surface of the construction element has been mounted on a curved concrete layer,
figure 11 shows an exemplary lifting means suitable for use in the method of the present invention, and
figure 12A and 12B demonstrate exemplary non-limiting engaging means of the lifting means.

### DESCRIPTION

The specific examples provided in the description given below should not be construed as limiting the scope and/or the applicability of the appended claims. Lists and groups of examples provided in the description given below are not exhaustive unless otherwise explicitly stated.

The present invention relates to a method for producing a construction element which outermost surfaces comprise coating elements such as stones. The method comprises the following steps
a) providing a mould,
b) layering first coating elements such as stones on bottom of the mould to produce a first outermost surface of the construction element,
c) adding filler material to slits between the first coating elements,
d) layering to the mould a sealant adapted to adhere to the first coating elements and to the filler material,
e) pouring to the mould an admixture comprising self-compacting concrete to produce a concrete layer and
f) for forming a second outermost surface of the construction element
   ○ providing an arrangement comprising
      - second coating elements such as stones layered on reinforcement means,
      - an elastic member arranged on the layered second coating elements and protruded into slits between the second coating elements,
   ○ mounting the arrangement on the concrete layer, and
   ○ removing the elastic member.

The first and the second outermost surface of the construction element comprises coating elements such as stones, preferably natural stones. Accordingly, slits between the coating elements cannot be avoided.

For illustrative purposes the method has been divided in different stages shown in the figures.

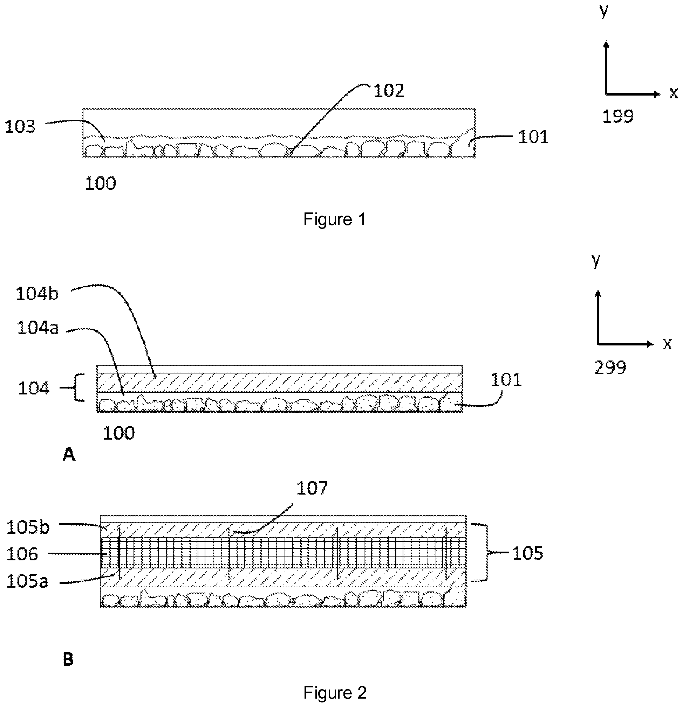

The first stage of the method comprising steps a) - d) is shown in figure 1 as a non-limiting exemplary embodiment. Accordingly, coating elements are layered on a bottom of a mould 100. One of the coating elements is marked with a reference number 101. The coating elements are preferably stones, more preferably natural stones. Exemplary natural stones are marble, granite, diabase, feldspar, flintstone and basalt. A preferable natural stone is slate. Also, artificial stones preferably artificial stones made of recycled materials such as recycled glass, recycled crushed concrete, recycled crushed bricks can be used as coating elements. The layered coating elements form the first outermost surface of the construction element. Any slits or the like between the first coating elements are filled with a filler material 102. Exemplary filler materials include ash stone, sand, crushed rock, crushed ceramics, crushed recycled glass and mixtures thereof. A particular filler material is crushed rock. Another particular filler material is ash stone.

In order to improve sealing of the first outermost surface of the construction element, the filler material added into the slits may be compressed e.g. by one or more of wetting, brushing, vibrating and pressing.

The sealing is further improved by layering to the mould a sealant 103, i.e. an admixture adapted to adhere to the filler material and to the first construction elements. Exemplary sealants comprise hydraulic binder composition, urethane, resin, thixotropic adhesive. As defined herein, a hydraulic binder is material which reacts with water by hydration.

The hydraulic binder composition is typically hydraulic cement known in the art. An exemplary hydraulic cement is Portland cement. Also, mixtures of different hydraulic cement types can be used. An exemplary resin is epoxy resin.

According to a preferable embodiment, the hydraulic cement comprises one of more cement accelerators such as calcium salts, aluminates, silicates and ferrites. The cement accelerator reacts with water seals the first outermost surface of the construction element. The water can be added to the filler material and/or to the sealant.

When the sealant comprises hydraulic cement, it comprises preferably also filler material such as sand.

According a preferable embodiment the sealant is added to the mould as a dry powdered admixture comprising aluminate cement and sand.

According to another preferable embodiment the sealant comprises a thixotropic adhesive, which is preferably moistened.

The second stage comprising step e) of the method is shown in figure 2A as a non-limiting exemplary embodiment. Accordingly, an admixture comprising self-compacting concrete is poured to the mould to produce a concrete layer 104. The admixture may consist of self-compacting concrete, or it can comprise a mixture of self-compacting concrete and one or more basic concretes, such as Portland concrete. Self-compacting concrete is liquid, cohesive concrete with the ability to condense without gravity and without traditional concrete vibration. (The European Guidelines for Self-Compacting Concrete. Specification, Production and Use; http://www.efnarc.org/pdf/SCCGuidelinesMay2005.pdf) The admixture does not leak to the bottom of the mould since any slits of the first outermost surface of the construction element have been sealed as described above. The sealant comprising hydraulic binder reacts with water present in the self-compacting concrete and further enhances the sealing. Furthermore, the weight of the concrete layer presses the sealant towards the first coating elements and the filler material in slits therebetween. The self-compacting concrete forms also a surface suitable for forming a second outermost surface of the construction element. A particular self-compacting concrete comprises aluminate cement.

The concrete layer may comprise two or more concrete sublayers, but the uppermost sublayer in the mould comprises self-compacting concrete.

According to a particular embodiment the method comprises pouring to the mould prior to step e) an admixture comprising basic concrete. A basic concrete comprises general purpose cement, such as general-purpose Portland cement or general-purpose blended cement. General-purpose blended cements contain typically Portland cement and more than 5% of either fly ash, ground slag, amorphous silica or a combination of these. Other components of the basic concrete are water and aggregates such as sand and crushed rocks.

According to this embodiment the method comprises for producing the concrete layer 104
▪ pouring to the mould an admixture comprising basic concrete to produce a first concrete sublayer 104a, and
▪ pouring onto the first concrete sublayer an admixture comprising self-compacting concrete.

Thus, the concrete layer 104 consists of two concrete sublayers 104a and 104b comprising basic concrete and self-compacting concrete, respectively.

According to a particular embodiment recycled material is admixed to the basic concrete and/or to the admixture comprising self-compacting concrete. Exemplary recycled material include crushed rubber, crushed plastics, crushed burned clinker, crushed asphalt, and crushed bricks. Also, various crushed polymers, preferably crushed recycled polymers can be admixed to the concrete.

According to another embodiment, the concrete layer 105 comprises two sublayers 105a, 105b, and a heat insulating means 106 therebetween. The concrete sublayers are engaged to each other with plurality of shafts, one of which is presented in figure 2B with reference number 107. According to this embodiment the method comprises for producing the concrete layer 105
- pouring to the mould a first admixture comprising concrete to produce a first concrete sublayer 105a, and
   ▪ arranging a heat insulating means 106 on the first concrete sublayer,
   ▪ pouring an admixture comprising self-compacting concrete on the heat insulating means, and preferably
   ▪ engaging the first concrete layer to the second concrete layer.

The first concrete layer and the second concrete layer can be made of same or different type of concrete. At least the second concrete sublayer 105b comprises self-compacting concrete.

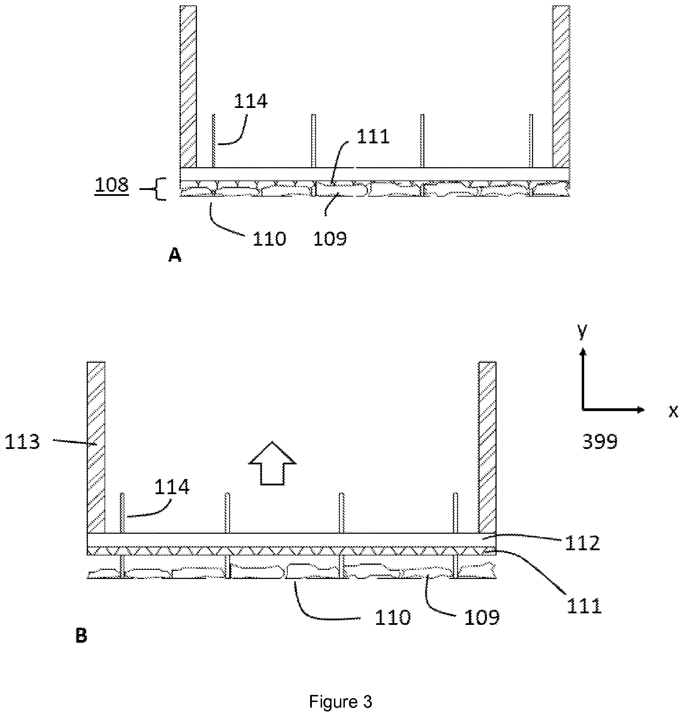

Figure 3A shows an arrangement 108 comprising second coating elements 109 such as stones layered on reinforcement means 110 and an elastic member 111 arranged on the layered second coating elements and protruded to the slits between the second coating elements. In order to protrude to the slits between the second construction elements, the elastic member is pressed between the layered second coating elements and a non-elastic member 112.

The arrangement is preferably provided by using a lifting means 113 comprising the non-elastic member and plurality of rods adapted to be engaged to the reinforcement means. One of the rods is marked in figure 3 with reference number 114. The rods can be engaged to the reinforcement means mechanically or magnetically. When magnetism is used, the lifting means includes preferably an electromagnet, and the rods and the reinforcement means are made of ferromagnetic material such as steel or iron. According to another embodiment, the magnet is a permanent magnet such as neodymium magnet.

According to an exemplary embodiment the providing of the arrangement 108 comprises the following steps:
○ layering second coating elements 109, such as stones to a reinforcement means 110,
○ arranging an elastic member 111 on the layered second coating elements,
○ providing a lifting means 113 comprising a non-elastic member 109 and plurality of rods 114,
○ engaging the plurality of rods to the reinforcement means, and
○ pressing the elastic member between the layered second coating elements and a non-elastic member 112 by pulling the plurality of rods towards the non-elastic member 112 i.e. in y-direction of the coordinate system 399 so that the elastic member protrudes to the slits between the second construction elements.

The pulling direction is shown in figure 3B with an arrow.

According to a preferable embodiment the lifting means comprises an electromagnet and the plurality of rods and the reinforcement means are made of ferromagnetic material such as iron or steel. Accordingly, the engaging and releasing of the plurality of rods from the reinforcement means is performed by switching on and off the electromagnet, respectively.

The second coating elements are preferably stones, more preferably natural stones. Exemplary natural stones are marble, granite, diabase, feldspar, flintstone and basalt. A preferable natural stone is slate. Also, artificial stones preferably made from recycled materials such as recycled glass, crushed bricks and crushed concrete can be used as coating elements. The second coating elements may be similar or different from the first coating elements.

The reinforcement means is preferably made of ferromagnetic material such as iron or steel. An exemplary reinforcement means is a typical reinforcement mesh. Another exemplary reinforcement means is fiber, preferably steel fiber or plastic fiber.

The elastic member may be made of any elastic material such as foam plastic, silicone and Styrofoam. A particular elastic material is foam plastic.

The non-elastic member may be made of any material which is less elastic than the elastic material. Preferable non-elastic materials are steel, aluminum and iron. Further exemplary non-elastic members are plates made of plastic and plywood. According to a particular embodiment the non-elastic member is part of the lifting means.

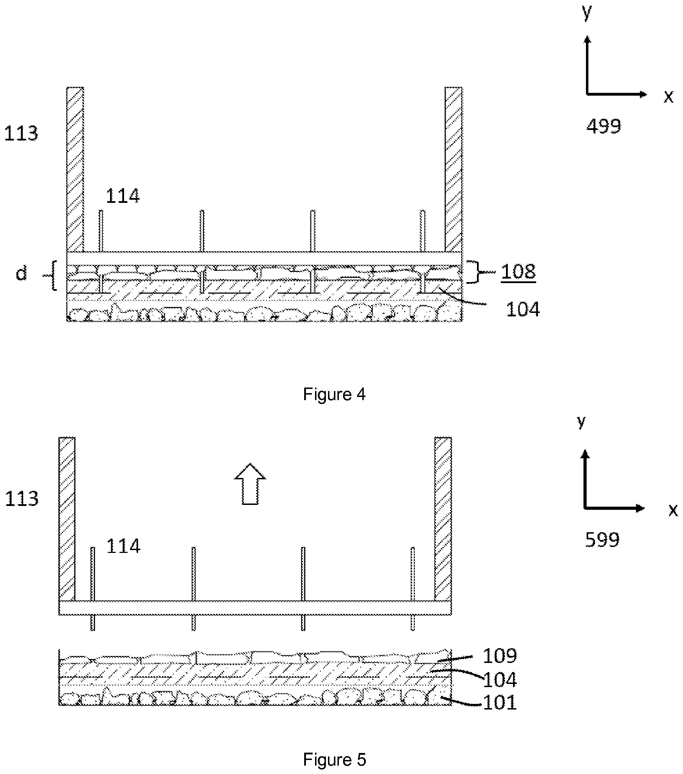

The next stage, shown in figure 4, comprises mounting the arrangement 108 on the concrete layer 104 using the lifting means 113. The mounting is performed before the concrete has cured. The arrangement is submerged to predetermined depth d to the concrete layer by moving the lifting means 113 in (-)-y-direction of the coordinate system 499. Since the elastic member fills any slits between the layered second coating elements, the uncured concrete does not leak to the second outermost surface of the construction element.

The next stage, shown in figure 5 comprises moving the lifting means 113 in y-direction of the coordinate system 599, releasing the rods 114 from the reinforcement means and removing the elastic member from the second outermost surface.

According to a non-claimed embodiment the method comprises patterning the concrete layer. The patterning can be performed by using methods known in the art.

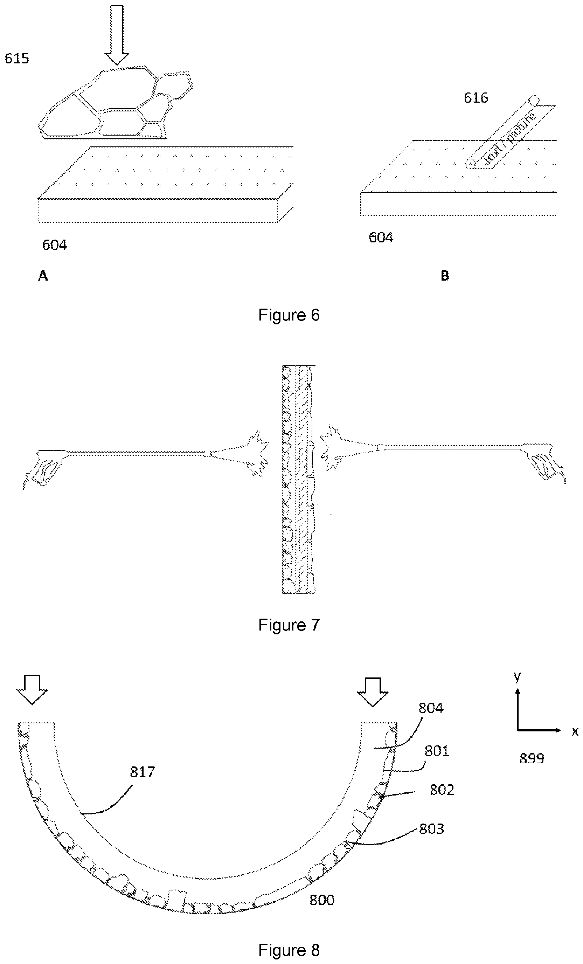

According to one embodiment, shown in figure 6A, patterns 615, such as figures resembling natural stones are stamped on the uncured concrete layer 604.

According to a non-claimed preferable embodiment, shown in figure 6B a membrane 616, such as a raster fabric comprising the desired pattern or image and a surface retarder is placed on uncured concrete layer 604. The surface retarder is a material adapted to retard hydradation reaction of the concrete layer. The surface retarder can be applied to areas of the membrane comprising the pattern or image or to the areas of the membrane not comprising the pattern or image comprises the surface retarder. After the concrete has cured, the membrane is washed away, revealing a pattern or image that results from the contrast between the smooth cement surface and the exposed aggregate surface as depressions or humps in the outermost layer of the construction element. Color pigments or aggregates of different colors can also be used in the concrete to further enhance a pattern or design.

The patterning described above resembles the graphic concrete technology of the art, but the patterning is applied on second outermost surface of the construction element. This has several advantages. Firstly, the method does not include pouring wet concrete on a membrane layered on a mould. Thus, the casting can be performed rapidly. Furthermore, the method allows introduction of complicated figures and images and the like on the outermost surface of the construction element.

When the second outermost surface of the construction element is modified by patterning, a reinforcement means can be arranged to the mould prior to pouring concrete.

The final steps of the method comprise typically removing the construction element from the mould, transferring to vertical position and cleaning the outermost surfaces. The cleaning may include brushing and washing. An exemplary cleaning by washing is shown in figure 7. The cleaning removes the unbound filler material from the outermost surfaces and the sealant between the slits of the first coating elements is revealed.

The mould does not need to be straight as in the embodiments disclosed above, but also non-straight moulds such as curved, concave and convex moulds can be used. When a non-straight mould is used in the method, all materials i.e. the coating elements, filler materials, sealants, non-elastic members, elastic members, admixtures comprising self-compacting concrete and the reinforcement means disclosed above can be applied. The use of non-straight moulds in the method has been demonstrated by exemplary non-limiting embodiments shown in figures 8-10.

Figure 8 shows an embodiment wherein coating elements have been layered on a bottom of a curved mould 800. One of the coating elements is marked with a reference number 801. The layered coating elements form the first outermost surface of the curved construction element. Any slits or the like between the coating elements are filled with a filler material 802.

In order to improve sealing of the first outermost surface of the construction element, the filler material added into the slits may be compressed e.g. by one or more of wetting, brushing, vibrating and pressing.

The sealing is further improved by layering to the mould a sealant 803, i.e. an admixture adapted to adhere to the filler material and to the first construction elements 801.

Next the mould 800 is covered by a curved lid 817, and an admixture comprising self-compacting concrete is poured to the mould to produce a concrete layer 804. The pouring is through ends of the mould. The pouring direction is shown in figure 8 with arrows.

After the lid 817 has been removed, the second outermost surface is mounted on the concrete layer.

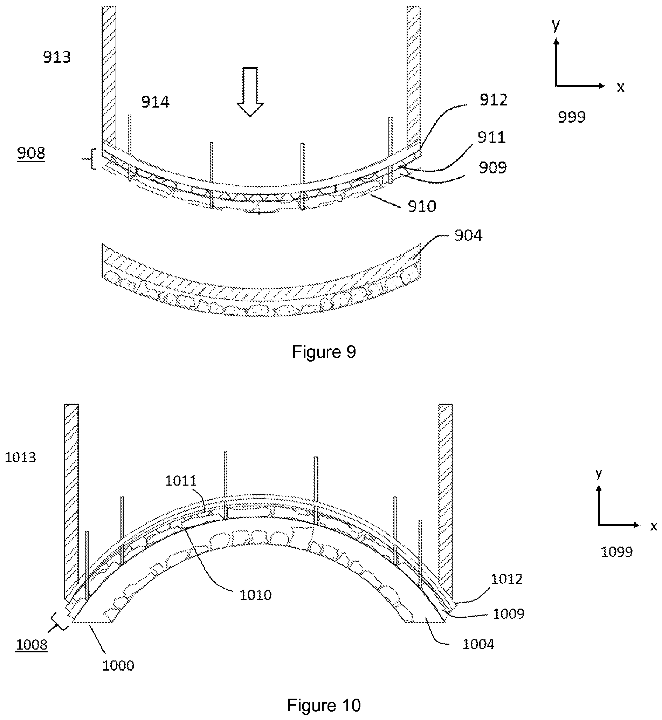

Figure 9 shows an exemplary curved arrangement 908 engaged to a lifting means 913. The arrangement comprises second coating elements 909 such as stones layered on reinforcement means 910 and an elastic member 911 arranged on the layered second coating elements and protruded to the slits between the second coating elements. The elastic member is pressed between the layered second coating elements and a non-elastic member 912. The figure show also the mounting of the arrangement 908 on the curved concrete layer 904 using the lifting means 913. The mounting is performed before the concrete has cured. The arrangement is submerged to predetermined depth to the concrete layer by moving the lifting means in (-)-y-direction of the coordinate system 999. Since the elastic member fills any slits between the layered second coating elements, the uncured concrete does not leak to the second outermost surface of the construction element.

Figure 10 shows another curved arrangement 1008 comprising second coating elements 1009 such as stones layered on reinforcement means 1010 and an elastic member 1011 arranged on the layered second coating elements and protruded to the slits between the second coating elements. The elastic member has been pressed between the layered second coating elements and a non-elastic member 1012, and the arrangement has been mounted on a curved concrete layer 1004.

The use of an arrangement such as 108, 908 and 1008 in the method has advantages. The elastic member of the arrangement prevents the self-compacting concrete from leaking to the outermost surface of the construction element during assembly. Furthermore, it prevents the coating elements from moving on the reinstatement means during transportation, mounting and the like. This is important in particular when producing non-straight, such as curved, concave and convex construction elements.

Still another advantage of the use of the arrangements is that they do not need to be assembled in the same site as the entire construction element. According to an exemplary embodiment plurality of arrangements are prepared on a quarry, stacked on each other, bundled, and transported to the final production site, where the bundled are removed, and the arrangements are used in the method for producing construction elements as described above.

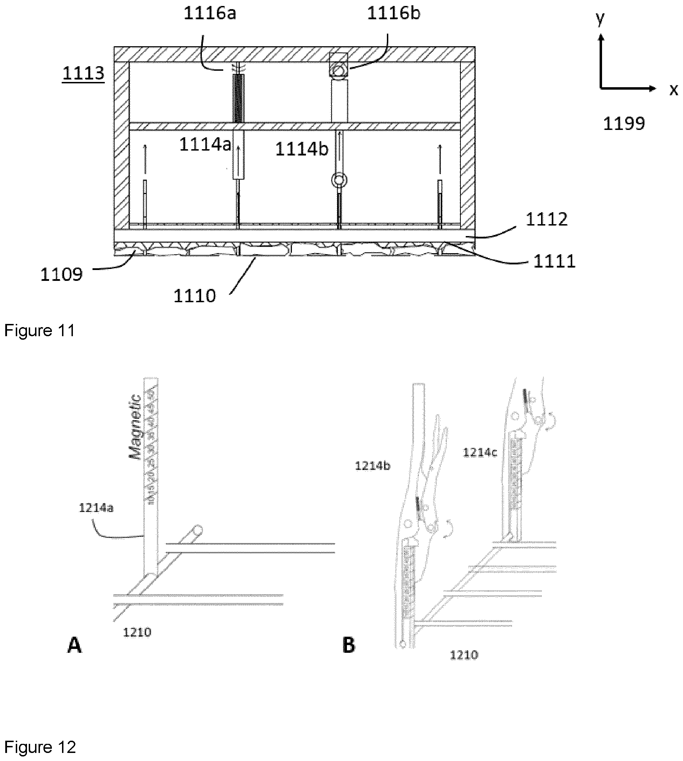

When the second outermost surface comprises a layer of construction elements such as rocks assembled on a reinforcement means, its mounting on the concrete layer is preferably performed using a lifting means designed for the purpose. An exemplary lifting means is shown in figure 11. Exemplary engaging means of a lifting means are shown in figure 12.

The lifting means 1113 comprises plurality of rods, two of them are marked with reference numbers 1114a and 1114b. The rods are adapted to be engaged to the reinforcement means as described above. The lifting means comprises also means to move the rods in ± y-direction of the coordinate system 1199. The movement can be performed e.g. by threads 1116a or by means 1116b adapted to operate with pressurized gas or hydraulics.

According to one embodiment the rod 1114a and the reinforcement means 1110 are made of ferromagnetic material such as steel or metal, and the lifting means comprises an electromagnet. Thus, the engaging and releasing is performed by switching on and off the electromagnet. An exemplary locking means of this type is shown in figure 12A. Another exemplary magnet is a neodymium magnet. According to another embodiment the rods 1214b, 1214c are engaged to the reinforcement means 1210 mechanically.

According to a preferable embodiment the lifting means comprises means for adjusting how deeply the system is embedded to the concrete layer. The means is exemplified in figure 12 by the numbered markings in the rod 1214a.

The finished construction elements can be used not only as vertical structures as walls pillars and fences but also in various horizontal structures such as stairs, walkways and driveways.

Further non claimed embodiments are described by the following numbered clauses.
1. An arrangement (108, 908, 1008) comprising
   ○ coating elements (109, 909, 1009) such as stones layered on reinforcement means (110, 910, 1010) and
   ○ an elastic member (111, 911, 1011) arranged on the layered coating elements and protruded into slits between the coating elements.
2. A lifting means (1113) comprising
   o an electromagnet,
   o plurality (1114a, 1114b) of rods made of ferromagnetic material, and adapted to be engaged to reinforcement means (1110) made of ferromagnetic material,
   ∘ non-elastic member (1112) and
   ∘ means (1116a, 1116b) adapted to move the plurality of rods in (±) y-direction of the coordinate system (1199).

The specific examples provided in the description given above should not be construed as limiting the scope and/or the applicability of the appended claims.

## Claims

1. A method for producing a construction element, the method comprising steps of
a) providing a mould (100, 800),
b) layering first coating elements (101, 801) such as stones on bottom of the mould to produce a first outermost surface of the construction element,
c) adding filler material (102, 802) to slits between the first coating elements,
d) layering to the mould a sealant (103, 803) adapted to adhere to the first coating elements and to the filler material,
e) pouring to the mould an admixture comprising self-compacting concrete to produce a concrete layer (104, 604, 804) wherein
f) for forming a second outermost surface of the construction element the method comprises
∘ providing an arrangement (108, 908) comprising
• second coating elements (109, 909) such as stones layered on reinforcement means (110, 910),
• an elastic member (111, 911) arranged on the layered second coating elements and protruded into slits between the second coating elements,
∘ mounting the arrangement on the concrete layer, and
∘ removing the elastic member.

2. The method according to claim 1 wherein the providing of step f) comprises
○ layering second coating elements (109, 909), such as stones to the reinforcement means (110, 910),
○ arranging the elastic member (111, 911) on the layered second coating elements,
o providing a lifting means (113, 913) comprising a non-elastic member (112, 912) and plurality of rods (114, 914),
○ engaging the plurality of rods to the reinforcement means, and
○ pressing the elastic member between the layered second coating elements and the non-elastic member by pulling the plurality of rods towards the non-elastic member (112, 912) in y-direction of a coordinate system (399, 999) so that the elastic member protrudes the slits between the second coating elements.

3. The method according to claim 2 wherein lifting means comprises an electromagnet, the plurality of rods are made of ferromagnetic material and the reinforcement means are made of ferromagnetic material, and wherein the engaging comprises turning on the electromagnet.

4. The method according to claim 1 or 2 wherein the mounting comprises submerging the arrangement (108, 908) to a predetermined depth (d) in the concrete layer.

5. The method according to any of claims 1-4 wherein the sealant is selected from hydraulic binder composition, resin, urethane, and thixotropic adhesive.

6. The method according to claim 5 wherein the hydraulic binder composition comprises hydraulic cement comprising one or more cement accelerators preferably selected from calcium salts, aluminates, silicates and ferrites, more preferably aluminates, and preferably also filler material.

7. The method according to any of claims 1-6 comprising moistening the filler material and/or the sealant.

8. The method according to any of claims 1-7 wherein the elastic member comprises foam plastic, Styrofoam or silicone, preferably foam plastic.

9. The method according to any of claims 1-8 wherein the admixture of step e) comprises one or more of Portland cement, recycled crushed rubber, recycled crushed plastics, recycled crushed burned clinker, recycled crushed asphalt, recycled crushed concrete and recycled crushed bricks.

10. The method according to any of claims 1-9 wherein the first coating elements are selected natural stones preferably selected from marble, granite, diabase, feldspar, flintstone and basalt or artificial stones made from recycled materials such as recycled glass, recycled crushed concrete, recycled crushed bricks.

11. The method according to any of claims 1-10 wherein the second coating elements are selected natural stones preferably selected from marble, granite, diabase, feldspar, flintstone and basalt or artificial stones made from recycled materials such as recycled glass, recycled crushed concrete, recycled crushed bricks.

12. The method according to any of claims 1-11 wherein the filler material is selected from one or more of sand, crushed stone, crushed ceramic, ash stone, crushed recycled glass.

## Patentansprüche

1. Verfahren zum Herstellen eines Bauelements, wobei das Verfahren die folgenden Schritte umfasst:
a) Bereitstellen einer Form (100, 800),
b) Aufschichten erster Beschichtungselemente (101, 801), wie Steine, auf den Boden der Form, um eine erste äußerste Oberfläche des Bauelements herzustellen,
c) Hinzufügen von Füllmaterial (102, 802) in Schlitze zwischen den ersten Beschichtungselementen,
d) Aufschichten eines Dichtungsmittels (103, 803), das dazu ausgelegt ist, an den ersten Beschichtungselementen und dem Füllmaterial zu haften, in die Form,
e) Gießen eines Gemischs, das selbstverdichtenden Beton umfasst, in die Form, um eine Betonschicht (104, 604, 804) herzustellen, wobei
f) zum Formen einer zweiten äußersten Oberfläche des Bauelements umfasst das Verfahren Folgendes:
○ Bereitstellen einer Anordnung (108, 908), die Folgendes umfasst:
• zweite Beschichtungselemente (109, 909), wie Steine, die auf Verstärkungsmitteln (110, 910) geschichtet sind,
• ein elastisches Element (111, 911), das auf den geschichteten zweiten Beschichtungselementen angeordnet ist und in Schlitze zwischen den zweiten Beschichtungselementen hervorsteht,
○ Montieren der Anordnung auf der Betonschicht, und
○ Entfernen des elastischen Elements.

2. Verfahren nach Anspruch 1, wobei das Bereitstellen von Schritt f) Folgendes umfasst:
○ Aufschichten zweiter Beschichtungselemente (109, 909), wie Steine, auf die Verstärkungsmittel (110, 910),
○ Anordnen des elastischen Elements (111, 911) auf den geschichteten zweiten Beschichtungselementen,
○ Bereitstellen eines Hebemittels (113, 913), das ein nicht elastisches Element (112, 912) und eine Vielzahl von Stangen (114, 914) umfasst,
○ Eingreifen der Vielzahl von Stangen in die Verstärkungsmittel, und
○ Drücken des elastischen Elements zwischen den geschichteten zweiten Beschichtungselementen und dem nicht elastischen Element durch Ziehen der Vielzahl von Stangen in Richtung des nicht elastischen Elements (112, 912) in y-Richtung eines Koordinatensystems (399, 999), so dass das elastische Element aus den Schlitzen zwischen den zweiten Beschichtungselementen hervorsteht.

3. Verfahren nach Anspruch 2, wobei das Hebemittel einen Elektromagnet umfasst, die Vielzahl von Stangen aus einem ferromagnetischen Material hergestellt ist und die Verstärkungsmittel aus einem ferromagnetischen Material hergestellt sind, und wobei das Eingreifen das Einschalten des Elektromagneten umfasst.

4. Verfahren nach Anspruch 1 oder 2, wobei das Montieren das Eintauchen der Anordnung (108, 908) bis zu einer vorbestimmten Tiefe (d) in die Betonschicht umfasst.

5. Verfahren nach einem der Ansprüche 1-4, wobei das Dichtungsmittel aus einer hydraulischen Bindemittelzusammensetzung, einem Harz, einem Urethan und einem thixotropen Klebstoff ausgewählt wird.

6. Verfahren nach Anspruch 5, wobei die hydraulische Bindemittelzusammensetzung hydraulischen Zement umfasst, der einen oder mehrere Zementbeschleuniger umfasst, die vorzugsweise aus Calciumsalzen, Aluminaten, Silikaten und Ferriten, besonders bevorzugt aus Aluminaten, und vorzugsweise auch aus Füllmaterial ausgewählt werden.

7. Verfahren nach einem der Ansprüche 1-6, das das Befeuchten des Füllmaterials und/oder des Dichtungsmittels umfasst.

8. Verfahren nach einem der Ansprüche 1-7, wobei das elastische Element Schaumstoff, Styropor oder Silikon, vorzugsweise Schaumstoff, umfasst.

9. Verfahren nach einem der Ansprüche 1-8, wobei das Gemisch von Schritt e) eines oder mehrere von Portlandzement, recyceltem zerkleinertem Gummi, recyceltem zerkleinertem Kunststoff, recyceltem zerkleinertem gebranntem Klinker, recyceltem zerkleinertem Asphalt, recyceltem zerkleinertem Beton und recycelten zerkleinerten Ziegelsteinen umfasst.

10. Verfahren nach einem der Ansprüche 1-9, wobei die ersten Beschichtungselemente aus Natursteinen, vorzugsweise ausgewählt aus Marmor, Granit, Diabas, Feldspat, Feuerstein und Basalt, oder Kunststeinen, die aus recycelten Materialien wie recyceltem Glas, recyceltem zerkleinertem Beton oder recycelten zerkleinerten Ziegelsteinen hergestellt sind, ausgewählt werden.

11. Verfahren nach einem der Ansprüche 1-10, wobei die zweiten Beschichtungselemente aus Natursteinen, vorzugsweise ausgewählt aus Marmor, Granit, Diabas, Feldspat, Feuerstein und Basalt, oder Kunststeinen, die aus recycelten Materialien wie recyceltem Glas, recyceltem zerkleinertem Beton oder recycelten zerkleinerten Ziegelsteinen hergestellt sind, ausgewählt werden.

12. Verfahren nach einem der Ansprüche 1-11, wobei das Füllmaterial aus einem oder mehreren von Sand, zerkleinertem Stein, zerkleinerter Keramik, Aschestein und zerkleinertem recyceltem Glas ausgewählt wird.

## Revendications

1. Procédé de production d'un élément de construction, le procédé comprenant les étapes suivantes
a) mise à disposition d'un moule (100, 800),
b) disposition d'une couche de premiers éléments de revêtement (101, 801) tels que des pierres au fond du moule pour produire une première surface la plus extérieure de l'élément de construction,
c) ajout d'un matériau de remplissage (102, 802) dans des fentes entre les premiers éléments de revêtement,
d) disposition d'une couche de scellant (103, 803) dans le moule, laquelle est adaptée pour adhérer aux premiers éléments de revêtement et au matériau de remplissage,
e) coulage d'un mélange comprenant du béton autocompactant dans le moule pour produire une couche de béton (104, 604, 804), dans lequel
f) pour former une deuxième surface la plus extérieure de l'élément de construction, le procédé comprend
∘ la mise à disposition d'un agencement (108, 908) comprenant
• des deuxièmes éléments de revêtement (109, 909), tels que des pierres, disposés en couche sur des moyens de renforcement (110, 910),
• une pièce élastique (111, 911) agencée sur les deuxièmes éléments de revêtement disposés en couche et faisant saillie dans des fentes entre les deuxièmes éléments de revêtement,
∘ le montage de l'agencement sur la couche de béton, et
∘ le retrait de la pièce élastique.

2. Procédé selon la revendication 1, dans lequel la mise à disposition de l'étape f) comprend
∘ la disposition d'une couche de deuxièmes éléments de revêtement (109, 909), tels que des pierres, sur les moyens de renforcement (110, 910),
∘ l'agencement de la pièce élastique (111, 911) sur les deuxièmes éléments de revêtement disposés en couche,
∘ la mise à disposition de moyens de levage (113, 913) comprenant une pièce non-élastique (112, 912) et une pluralité de tiges (114, 914),
∘ l'engagement de la pluralité de tiges sur les moyens de renforcement, et
∘ la pression de la pièce élastique entre les deuxièmes éléments de revêtement disposés en couche et la pièce non-élastique par traction de la pluralité de tiges vers la pièce non-élastique (112, 912) dans une direction y d'un système de coordonnées (399, 999) de telle façon que la pièce élastique fait saillie dans les fentes entre les deuxièmes éléments de revêtement.

3. Procédé selon la revendication 2, dans lequel le moyen de levage comprend un électroaimant, la pluralité de tiges sont constituées d'un matériau ferromagnétique et les moyens de renforcement sont constitués d'un matériau ferromagnétique, et dans lequel l'engagement comprend la rotation sur l'électroaimant.

4. Procédé selon la revendication 1 ou 2, dans lequel le montage comprend l'immersion de l'agencement (108, 908) à une profondeur prédéterminée (d) dans la couche de béton.

5. Procédé selon l'une quelconque des revendications 1 à 4, dans lequel le scellant est sélectionné parmi une composition de liant hydraulique, une résine, l'uréthane et un adhésif thixotropique.

6. Procédé selon la revendication 5, dans lequel la composition de liant hydraulique comprend du ciment hydraulique comprenant un ou plusieurs accélérateurs de ciment sélectionnés de préférence parmi des sels de calcium, des aluminates, des silicates et des ferrites, plus préférentiellement parmi des aluminates, et de préférence également un matériau de remplissage.

7. Procédé selon l'une quelconque des revendications 1 à 6, comprenant l'humidification du matériau de remplissage et/ou du scellant.

8. Procédé selon l'une quelconque des revendications 1 à 7, dans lequel la pièce élastique comprend de la mousse plastique, de la styromousse ou du silicone, de préférence de la mousse plastique.

9. Procédé selon l'une quelconque des revendications 1 à 8, dans lequel le mélange de l'étape e) comprend l'un ou plusieurs parmi du ciment de Portland, du caoutchouc broyé recyclé, des plastiques broyés recyclés, du clinker brûlé broyé recyclé, de l'asphalte broyé recyclé, du béton broyé recyclé et des briques broyées recyclées.

10. Procédé selon l'une quelconque des revendications 1 à 9, dans lequel les premiers éléments de revêtement sont des pierres naturelles sélectionnées, de préférence sélectionnées parmi le marbre, le granit, la diabase, le feldspath, le silex et le basalte ou des pierres artificielles constituées de matériaux recyclés tels que du verre recyclé, du béton broyé recyclé, des briques broyées recyclées.

11. Procédé selon l'une quelconque des revendications 1 à 10, dans lequel les deuxièmes éléments de revêtement sont des pierres naturelles sélectionnées, de préférence sélectionnées parmi le marbre, le granit, la diabase, le feldspath, le silex et le basalte ou des pierres artificielles constituées de matériaux recyclés tels que du verre recyclé, du béton broyé recyclé, des briques broyées recyclées.

12. Procédé selon l'une quelconque des revendications 1 à 11, dans lequel le matériau de remplissage est sélectionné parmi l'un ou plusieurs parmi le sable, la pierre broyée, la céramique broyée, la pierre de cendre, le verre recyclé broyé.
